# EUROPEAN PATENT APPLICATION

(11) **EP 1 275 702 A1**
(43) Date of publication of application: **15.01.2003**
(21) Application number: 02015354.0
(22) Date of filing: 10.07.2002
(51) Int. Cl.: C09D 11/00

(54) **Hot melt ink compostion and material recorded with the same**

(30) Priority: 11.07.2001 JP 2001210925
(71) Applicant: SEIREN CO., LTD., Fukui-shi, Fukui-ken 918-8560 (JP)
(72) Inventor: Itoh, Yoshikatsu, Fukui-shi, Fukui-ken 918-8560 (JP)
(74) Representative: Goddar, Heinz J., Dr.

(57) **Abstract**

Provision of a hot melt ink composition for ink-jet printing, which is capable of representing the intrinsic color of its coloring component and is stable at high temperature, allowing excellent reproducibility of the color of the images resultantly recorded on recording medium. A hot melt ink composition for ink-jet printing, which is composed of coloring matter, s saturated hydrocarbon wax (solid at room temperature) and resin, said wax giving a color value of 1.0 or less as defined by ASTM D 1500 and said resin giving a YI value of -5 to 5 as defined by JIS K 7103. The hot melt ink composition of the present invention, when ink-jet printed onto recording medium, allows its coloring matter's intrinsic color to be accurately represented on the recording medium with rich color rendition.

## Description

The present invention relates to a hot melt ink composition for ink-jet printing and more particularly to such a hot melt ink composition for ink-jet printing, which is capable of representing the color intrinsically possessed by the coloring matter contained in it and which is excellently stable in its physical properties at high temperature, and material recorded with the same.

There has been widespread use of recording systems based on ink-jet printing technology. These recording systems are typically designed to use a liquid ink composed of coloring matter (dye or pigment) dissolved (dispersed) in water, organic solvent or other dissolving medium (dispersing medium), squirting the ink onto paper, film, fabric or other recording medium to record images on the medium.
However, such recording systems consisting of squirting a liquid ink onto recording medium present the problem of the ink printed onto the recording medium being liable to "bleed", failing to record sharp images onto it. To solve this "bleeding" problem, a method has been proposed, whereby such ink-jet printing is applied onto recording medium pretreated to form an ink accepting layer on the recording surface of the medium. This method, however, not only requires such a pretreatment process to form an ink accepting layer on the surface of recording medium onto which ink is to be applied, but also, after ink-jet printing onto the recording medium, may involve a further process of treating it for removal of the ink accepting layer from it, making the method extremely poor in efficiency.
For the above-described reason, an ink-jet printing method using hot melt ink has been developed to eliminate the need for formation of an ink accepting layer on recording medium, allowing ink-jet printing to be directly applied onto the recording surface. The hot melt ink for use in this ink-jet printing method is composed of coloring material dissolved in a vehicle, available in a solid (semi-solid) state at room temperature, heated to its molten state as a dissolving medium for the coloring material.
The hot melt ink with such a composition as mentioned above is ink-jet printed onto recording medium through high-temperature nozzles to spray it as molten droplets onto the recording medium, on the surface of which it is cooled and solidified as dots to represent images on the recording surface. The hot melt inks that are useful in the above-described ink-jet printing system includes a hot melt ink prepared using natural wax as its vehicle (as disclosed in Japanese Patent JP-A-58-108271) and a hot melt ink prepared using synthetic wax as its vehicle (as disclosed in Japanese Patent JP-A-62-295973).
However, the vehicles of these hot melt inks are subject to change in their physical properties due to heat in the head of ink-jet recording equipment in which they are heated for a long period of time. As a result of such change in their physical properties, these vehicles change in color and viscosity, adversely affecting the ink stability with resultant poor reproducibility of the images ink-jet printed onto recording medium.
For the purpose of improving on this point of hot melt ink for ink-jet printing, Japanese Patent JP-A-4-339871 disclosed a hot melt ink developed using paraffin wax and ethylene vinylacetate copolymer as its vehicle which is heat-resistant. This hot melt ink, which is composed of coloring matter dispersed in such a heat-resistant vehicle, when applied onto recording medium, is solidified as dots on the surface of the recording medium in such a way that the coloring matter dispersed in the vehicle is concentrated at the center of the dots with the progress of the solidification of the vehicle.
However, this ink composition is such that the color of the coloring matter is visible through the vehicle, causing the color of the vehicle on the outer side of the ink to dull the color intrinsically possessed by the coloring matter on its inner side, which fact means that when it is ink-jet printed onto recording medium, it fails to represent the coloring matter's intrinsic color on the recording medium. This heat-resistant hot melt ink, especially when prepared using light-shade coloring matter, is subject to marked dulling of the coloring matter's intrinsic color when applied onto recording medium, presenting the problem of failing to provide for subtle color representation.
Against the background of the prior art as described above, the present invention has been accomplished in order to solve the above-mentioned problems associated with the prior art.

It is an object of the invention to provide a hot melt ink composition for ink-jet printing, which is capable of representing the color intrinsically possessed by the coloring matter contained in it. A further object of the present invention is to provide a hot melt ink composition, which is so highly stable at high temperature that it can be ink-jet printed on recording medium with excellently stable reproducibility of the color of the images thus recorded on the recording medium. Still a further object of the present invention is the provision of material recorded with said hot melt ink composition.
To achieve the above-mentioned objects of the present invention, the inventors conducted various relevant researches, and as a result of the researches, discovered that ink-jet printing using hot melt ink involves certain influence of the color of its vehicle and that of its coloring matter on each other's color development when it is ink-jet printed on recording medium, which discovery led to the accomplishment of the present invention. Specifically, the present invention consists in the following five aspects:
(1) a hot melt ink composition for ink-jet printing, which is composed of coloring matter and wax (solid at room temperature), said wax giving a color value of 1.0 or less as defined by ASTM D 1500;
(2) a hot melt ink composition for ink-jet printing, which is composed of coloring matter, wax (solid at room temperature) and resin, said wax giving a color value of 1.0 or less as defined by ASTM D 1500 and said resin giving a YI value of ―5 to 5 as defined by JIS K 7103;
(3) a hot melt ink composition for ink-jet printing as specified in aspect (1) above, wherein said wax is saturated hydrocarbon wax;
(4) a hot melt ink composition for ink-jet printing, which is composed of coloring matter, saturated hydrocarbon wax (solid at room temperature) and resin, said wax giving a color value of 1.0 or less as defined by ASTM D 1500 and said resin giving a YI value of ―5 to 5 as defined by JIS K 7103; and
(5) material ink-jet recorded with such a hot melt ink composition as specified in aspect (1), (2), (3) or (4) above.
Unless inconsistent with the purpose of the present invention, combination of more than one of the above-mentioned aspects (1) to (4) of the present invention can be reasonably included in the present invention, and material ink-jet printed with a hot melt ink composition provided by such combination can also be reasonably included in the present invention.

### Preferred Embodiment of the Invention

To further illustrate the present invention, a preferred embodiment of the present invention will be described below. The present invention comprises a hot melt ink for ink-jet printing, which uses, as its vehicle, wax practically white in color while in a solid state or resin substantially colorless and transparent to allow the coloring matter contained in it to represent its intrinsic color when it is ink-jet printed on recording medium.
In addition, the wax and resin for use as a vehicle of a hot melt ink (or hot melt ink composition) of the present invention is not subject to change in its physical properties due to heat, allowing the hot melt ink (or hot melt ink composition) to remain so stable in the head of ink-jet printing equipment where it is exposed to heat for an extended period of time that it provides for excellently stable reproducibility of the color of the images thus ink-jet recorded on recording medium.
The coloring matter that is useful in the hot melt ink composition of the present invention can be selected from pigments and dyes generally available for use in ink-jet printing. If material recorded by ink-jet printing according to the present invention requires to be resistant to light and/or weather, the hot melt ink composition is preferably prepared using, as its coloring component, pigment which can be properly selected from organic and inorganic pigments generally available for use in ink-jet printing.
Among the preferred organic pigments are nitroso, lake, azo lake, insoluble azo, mono-azo, dis-azo, condensed azo, benzoimidazolone, phthalocyanine, anthraquinone, perylene, quinacridone, dioxazine, isoindoline, azomethine and pyrrolopyrole compounds. The preferred inorganic pigments include, without limitation, oxides, hydroxides, sulfides, ferrocyanides, chromates, sulfates, carbonates, silicates, phosphates, carbon (carbon black) and metal powder.
If material recorded by ink-jet printing according to the present invention requires no high resistance to weather and/or light, the hot melt ink composition can be prepared using, as its coloring component, a dyestuff, which can be selected optionally from dyes generally available for use in ink-jet printing. Among the preferred dyestuffs are azo, anthraquinone, indigoid, phthalocyanine, carbonium, quinoneimine, methine, xanthene, nitro, nitroso and other similar compounds generally known as oil-soluble, disperse, acid, reactive, cationic and direct dyes.
The useful vehicle of the hot melt ink of the present invention as a medium for dissolving (or dispersing) its coloring component is wax that gives a color value of 1.0 or less as defined by ASTM D 1500, which is an important factor constituting the present invention. ASTM D 1500 is a standard test method specified by American Society for Testing Materials (ASTM) for numerical evaluation of the color of petroleum products on a 0.5 basis.
The relationship between ASTM D 1500 color value and its corresponding color defines 0.5 or less as white, 4.0 or less as light amber, 6.0 or less as yellow (amber), 8.0 or less as brown and more than 8.0 as black. Accordingly, as claimed in the present invention, the use of wax, which assumes an amber color regarded as white or substantially white while in a solid state, or which gives a color value of 1.0 or less as defined by ASTM D 1500, as a vehicle for dissolving or dispersing coloring matter with a chromatic color of yellow, red or blue causes little deterioration in the saturation of the coloring matter, allowing it to represent its intrinsic color with excellent reproducibility.
According to the present invention, the use of wax, which assumes a white color while in a solid state, or which gives a color value of 0.5 or less as defined by ASTM D 1500, as a vehicle of the hot melt ink composition of the present invention, is more desirable because it allows subtle color representation especially when it involves light or medium color. Contrary to the present invention, however, if wax which assumes a yellow, brown or black color while in a solid state, or gives a color value of more than 1.0, is used as a vehicle for dissolving or dispersing coloring matter, the color of the wax is mixed with the color of the coloring matter, causing it to fail to represent its intrinsic color accurately.
Specific examples of wax assuming a white to light amber color include, without limitation, petroleum wax such as paraffin wax and microcrystalline wax, derivatives of petroleum wax as modified (with hydroxyl or carboxyl group introduced into its molecules), synthetic wax such as polyethylene wax, Fischer-Tropsch wax and amide wax and hydrogenated wax such as hydrogenated castor oil and hydrogenated castor oil derivatives. The wax for use in the present invention is selected from the above-mentioned waxes, if confirmed to give a color value of 1.0 or less as defined by ASTM D 1500.
In terms of its structure, the preferred wax for the present invention is saturated hydrocarbon wax. Saturated hydrocarbon wax is chemically so inert that when exposed to heat, it is not subject to molecular dissociation, oxidation and other similar phenomena, which may cause any change in its color, viscosity and other physical properties.
Therefore, the hot melt ink composition of the present invention, which comprises such wax as specified above as its vehicle, is not liable to undergo any change in its color or viscosity in the head of ink-jet printing equipment where it is exposed to heat for an extended period of time, providing for its stable color reproduction (and discharge). Specifically, as claimed in the present invention, the use of saturated hydrocarbon wax, which gives an ASTM D 1500 color value of 1.0 or less, as a vehicle for dissolving or dispersing coloring matter gives a hot melt ink composition for ink-jet printing, which always assumes a stable color and undergoes no change in viscosity and other physical properties during the ink-jet printing process, allowing it to represent the coloring matter's intrinsic color on recording medium with excellent reproducibility.
Specific examples of saturated hydrocarbon wax useful in the present invention include, without limitation, paraffin wax, microcrystalline wax, polyethylene wax and Fischer-Tropsch wax. According to the present invention, these waxes can be used alone or in combination as a vehicle for dissolving or dispersing coloring matter to form such a hot melt ink composition as claimed in the present invention.
The hot melt ink composition of the present invention, in addition to the above-mentioned coloring matter and wax, may contain resin to increase the adhesiveness and flexibility of the wax layer resultantly formed on recording medium. The useful resin that can be contained in a hot melt ink of the present invention is preferably selected from a group of resins, which give a YI value of ―5 to 5 as defined by JIS K 7103, so as to avoid any reduction in the saturation of the coloring matter contained in the hot melt ink composition, providing for its subtle color representation.
JIS K 7103 is a test method for numerical evaluation of the yellowness of substantially colorless or white plastics (in a solid or liquid state) to represent their evaluation results as YI (yellowness Index) values. The YI value of any plastic obtained by JIS K 7103 is indicated as a "plus" value if the color of the plastic is toward the "yellow" side and as a "minus" value if it is toward the "blue" side.
Any resin, which gives a YI value of ―5 to 5 as defined by JIS K 7103, can be regarded as practically colorless, and even if contained in a hot melt ink composition of the present invention for the above-mentioned reason, the resin has little or no adverse effect on the saturation of the coloring component of the hot melt ink composition, while contributing to increased adhesiveness and flexibility of the wax layer resultantly formed on recording medium. The use of resin with a YI value of more than 5 or less than ―5 as defined by JIS K 7103 in a hot melt ink composition referred to in the present invention causes the hot melt ink composition to be tinged with yellow or blue, respectively, resulting in failure to represent the intrinsic color of its coloring component when it is ink-jet printed on recording medium.
The resin for use in the present invention is preferably selected, as in the case of wax of the present invention, from a group of resins, which are subject to little change or deterioration in color, viscosity or other physical properties due to heat. Among such resins are polyethylene resin, polypropylene resin, polystyrene resin, ethylene-vinylacetate copolymer resin, ethylene-ethylacrylate copolymer resin, polyacrylate resin, methacrylate resin, polyurethane resin, petroleum resin, hydrogenated petroleum resin, rosin resin, hydrogenated rosin resin, polyester resin, styrene-based thermoplastic elastomer, olefin thermoplastic elastomer, polyester-based thermoplastic elastomer, polyurethane-based thermoplastic elastomer and polyamide-based thermoplastic elastomer.
According to the present invention, these resins can be used alone or in combination as a component of the hot melt ink composition of the present invention, if highly compatible with wax as its major component. In addition, the hot melt ink composition of the present invention can reasonably contain one or more of dispersants, thermal stabilizers, antioxidants, antiseptics, pH controllers, antifoamers, penetrants and other additives as required and unless any of such additives is contrary to the purpose of the present invention.
The hot melt ink composition of the present invention is prepared by melting and mixing its components ― coloring matter, wax, and if necessary, resin and other additive(s) ― to obtain a molten mixture, which is then subjected to dispersion by means of a three-roll mill, ball mill, colloid mill, attritor and other disperser. The dispersed molten mixture is passed through a heating filter before being poured into a molding die for cooling.
The ink-jet printing system that is useful for the hot melt ink composition of the present invention is not limited to a special ink-jet printer designed for it, but a conventional ink-jet printer, the head of which is equipped with a heater, or a commercially available hot melt ink-jet printer.
The recording medium that is useful in the present invention includes, without limitation, textile, paper, plastic, ceramic and metal. Among the preferred textile are knitted, woven and non-woven fabrics composed of fiber material such as cotton, hemp, wool, silk, viscose rayon, cupra rayon, polynosic, diacetate, triacetate, vinylon, nylon, vinylidene, polyvinyl chloride, polyester, acrylic, polypropylene, polyurethane, polychlal, benzoate, promix, estamid, polyethylene and cation dyeable polyester.
Among the preferred paper are plain paper, woodfree paper, coat paper, kraft paper, glassine paper and Japanese paper. Among the preferred plastic are acrylic, polystyrene and vinyl chloride. Preferred ceramic include porcelain, glass, enamel and cement. Among the preferred metal are copper, aluminum and stainless steel.
According to the present invention, ink-jet printing of any of the above-listed recording medium with the hot melt ink composition of the present invention normally requires no treatment of the recording medium before the ink-jet printing, but may involve its primer coating or other pretreatment as required. Application of the hot melt ink composition of the present invention onto any of such recording medium as mentioned above by ink-jet printing gives such recorded material as claimed in the present invention. According to the present invention, the recorded material may be appropriately finished as required.
The present invention will be more clearly understood by reference to the following examples, which, however, are intended to illustrate the present invention and are not to be construed to limit the scope of the present invention.

### [Examples]

### [Recording medium]

All of the examples and comparative examples hereinafter given were carried out using polyester 100% plain weave fabric as a recording medium onto which ink-jet printing was applied according to their respective formulations to produce recorded material.

### [Evaluation]

Each of the hot melt ink compositions prepared in the examples and comparative examples and material recorded with the hot melt ink composition were evaluated as described below.

### · Color shade (or brilliance)

The recorded material produced in each of the examples and comparative examples was evaluated for color representation by visual observation and rated on the following three-grade (○×Δ) scale:
○ : Brilliant color with good representation of the intrinsic color of the coloring matter contained in the hot melt ink
Δ: Partially dull color with insufficient representation of the intrinsic brilliant color of the coloring matter contained in the hot melt ink
×: Dull color with poor representation of the intrinsic brilliant color of the coloring matter contained in the hot melt ink

### · Color stability

Each of the hot melt ink compositions prepared in the examples and comparative examples was evaluated for color stability by comparing its two samples ― (A) hot melt ink composition allowed to stand for 72 hours at a constant temperature of 130°C after its preparation and (B) hot melt ink composition not allowed to stand under said condition, each of which was applied onto the specified recording medium to produce recorded material. The recorded material was then measured with spectrophotometer CM-1000 (Minolta). The resultant two measurements were compared to determine the difference between both as ΔE value (color difference), which, if smaller, indicates higher stability of the hot melt ink composition.

### · Viscosity stability

The above-described two samples (A) and (B) of each of the hot melt ink compositions prepared in the examples and comparative examples were subjected to heating at 130°C before being measured for viscosity with a B type viscometer (Tokimec). The two measurements were compared to rate the hot melt ink composition for viscosity stability on the following three-grade (○×Δ) scale:
○ : No viscosity change (less than ±20%)
Δ : Slight viscosity change (±20% or more, but less than 40%)
× : Marked viscosity change (±40% or more)

### [Example 1]

100 weight parts of wax OX-020T (petroleum wax derivative prepared by Nippon Seiro with ASTM D 1500 color value of 0.5) was weighed out and heated at 130°C into a molten state. To the molten wax, one weight part of HOSTAPERM PINK E-02 (pigment supplied by Clariant) and 0.3 weight part of LANOX FP-1410N (dispersant supplied by Nippon Fine Chemical) were added. The resultant mixture was subjected to dispersion under heating, followed by filtration under heating for removal of any impurities contained in it, before being allowed stand at room temperature for cooling to prepare a homogenous magenta hot melt ink composition. The magenta hot melt ink composition was then applied onto the specified recording medium using a hot melt ink-jet printer under the following ink-jet printing condition to produce recorded material. The magenta hot melt ink composition and the recorded material were evaluated as described above. The results of the evaluation are shown in Table 1.

### [Ink-jet printing condition]

a) Nozzle diameter: 70 µm
b) Applied voltage: 50V
c) Pulse width: 20 µs
d) Driver frequency: 1kHz
e) Resolution: 180dpi

### [Example 2]

A hot melt ink composition was prepared according to the same procedure as used in Example 1, except that as its wax component, BE SQUARE 195 (microcrystalline wax prepared by Toyo-Petrolite with ASTM D 1500 color value of 0.5) was used. The hot melt ink composition was then applied onto the specified recording medium using a hot melt ink-jet printer under the same ink-jet printing condition as used in Example 1 to produce recorded material. The hot melt ink composition and the recorded material were evaluated as described above. The results of the evaluation are shown in Table 1.

### [Example 3]

A hot melt ink composition was prepared according to the same procedure as used in Example 1, except that as its wax component, 60 weight parts of BE SQUARE195 (microcrystalline wax prepared by Toyo-Petrolite with ASTM D 1500 color value of 0.5) and 40 weight parts of VICTORY (microcrystalline wax prepared by Toyo-Petrolite with ASTM D 1500 color value of 0.5) were used. The hot melt ink composition was then applied onto the specified recording medium using a hot melt ink-jet printer under the same ink-jet printing condition as used in Example 1 to produce recorded material. The hot melt ink composition and the recorded material were evaluated as described above. The results of the evaluation are shown in Table 1.

### [Example 4]

A hot melt ink composition was prepared according to the same procedure as used in Example 3, except that as its resin component, five weight parts of NIPOFLEX722 (ethylene-vinylacetate copolymer resin prepared by Tosoh with JIS K 7103 YI value of ―5) was additionally used. The hot melt ink composition was then applied onto the specified recording medium using a hot melt ink-jet printer under the same ink-jet printing condition as used in Example 1 to produce recorded material. The hot melt ink composition and the recorded material were evaluated as described above. The results of the evaluation are shown in Table 1.

### [Example 5]

A hot melt ink composition was prepared according to the same procedure as used in Example 3, except that as its resin component, TUFTEC H1141 (styrene-based thermoplastic resin prepared by Asahi Kasei with JIS K 7103 YI value of 1) was additionally used. The hot melt ink composition was then applied onto the specified recording medium using a hot melt ink-jet printer under the same ink-jet printing condition as used in Example 1 to produce recorded material. The hot melt ink composition and the recorded material were evaluated as described above. The results of the evaluation are shown in Table 1.

### [Example 6]

A hot melt ink composition was prepared according to the same procedure as used in Example 1, except that as its wax component, Hi-Mic-2045 (microcrystalline wax prepared by Nippon Seiro with ASTM D 1500 color value of 1.0) was used. The hot melt ink composition was then applied onto the specified recording medium using a hot melt ink-jet printer under the same ink-jet printing condition as used in Example 1 to produce recorded material. The hot melt ink composition and the recorded material were evaluated as described above. The results of the evaluation are shown in Table 1.

### [Example 7]

100 weight parts of wax BE SQUARE195 (microcrystalline wax prepared by Toyo-Petrolite with ASTM D 1500 color value of 0.5) and five weight parts of resinVISTACG (atactic polypropylene prepared by Chiba Fine Chemical with JIS K 7103 YI value of 9) were mixed and heated at 130°C into a molten state. To the molten mixture, one weight part of HOSTAPERM PINK E-02 (pigment supplied by Clariant) and 0.3 weight part of LANOX FP-1410N (dispersant supplied by Nippon Fine Chemical) were added. The resultant mixture was subjected to dispersion under heating, followed by filtration under heating for removal of any impurities contained in it, before being allowed stand at room temperature for cooling to prepare a homogenous magenta hot melt ink composition. The magenta hot melt ink composition was then applied onto the specified recording medium using a hot melt ink-jet printer under the same ink-jet printing condition as used in Example 1 to produce recorded material. The magenta hot melt ink composition and the recorded material were evaluated as described above. The results of the evaluation are shown in Table 1.

### [Comparative Example 1]

100 weight parts of wax Hi-Mic-1070 (microcrystalline wax prepared by Nippon Seiro with ASTM D 1500 color value of 1.5) was weighed out and heated at 130°C into a molten state. To the molten wax, one weight part of HOSTAPERM PINK E-02 (pigment supplied by Clariant) and 0.3 weight part of LANOX FP-1410N (dispersant supplied by Nippon Fine Chemical) were added. The resultant mixture was subjected to dispersion under heating, followed by filtration under heating for removal of any impurities contained in it, before being allowed stand at room temperature for cooling to prepare a homogenous magenta hot melt ink composition. The magenta hot melt ink composition was then applied onto the specified recording medium using a hot melt ink-jet printer under the same ink-jet printing condition as used in Example 1 to produce recorded material. The magenta hot melt ink composition and the recorded material were evaluated as described above. The results of the evaluation are shown in Table 1.

### [Comparative Example 2]

Ahot melt ink composition was prepared according to the same procedure as used in Comparative Example 1, except that as its wax component, LICOWAX OP (montan wax prepared by Clariant with ASTM D 1500 color value of 1.5) was used. The hot melt ink composition was then applied onto the specified recording medium using a hot melt ink-jet printer under the same ink-jet printing condition as used in Example 1 to produce recorded material. The hot melt ink composition and the recorded material were evaluated as described above. The results of the evaluation are shown in Table 1.

### [Comparative Example 3]

A hot melt ink composition was prepared according to the same procedure as used in Comparative Example 1, except that as its wax component, WAXREX155 (slack wax prepared by Exxon Mobil with ASTM D 1500 color value of 2.0) was used. The hot melt ink composition was then applied onto the specified recording medium using a hot melt ink-jet printer under the same ink-jet printing condition as used in Example 1 to produce recorded material. The hot melt ink composition and the recorded material were evaluated as described above. The results of the evaluation are shown in Table 1.

### [Comparative Example 4]

100 weight parts of WAXREX155 (slack wax prepared by Exxon Mobil with ASTM D 1500 color value of 2.0) and five weight parts of resinVISTAC G (atactic polypropylene prepared by Chiba Fine Chemical with JIS K 7103 YI value of 9) were mixed and heated at 130°C into a molten state. To the molten mixture, one weight part of HOSTAPERM PINK E-02 (pigment supplied by Clariant) and 0.3 weight part of LANOX FP-1410N (dispersant supplied by Nippon Fine Chemical) were added. The resultant mixture was subjected to dispersion under heating, followed by filtration under heating for removal of any impurities contained in it, before being allowed stand at room temperature for cooling to prepare a homogenous magenta hot melt ink composition. The magenta hot melt ink composition was then applied onto the specified recording medium using a hot melt ink-jet printer under the same ink-jet printing condition as used in Example 1 to produce recorded material. The magenta hot melt ink composition and the recorded material were evaluated as described above. The results of the evaluation are shown in Table 1.

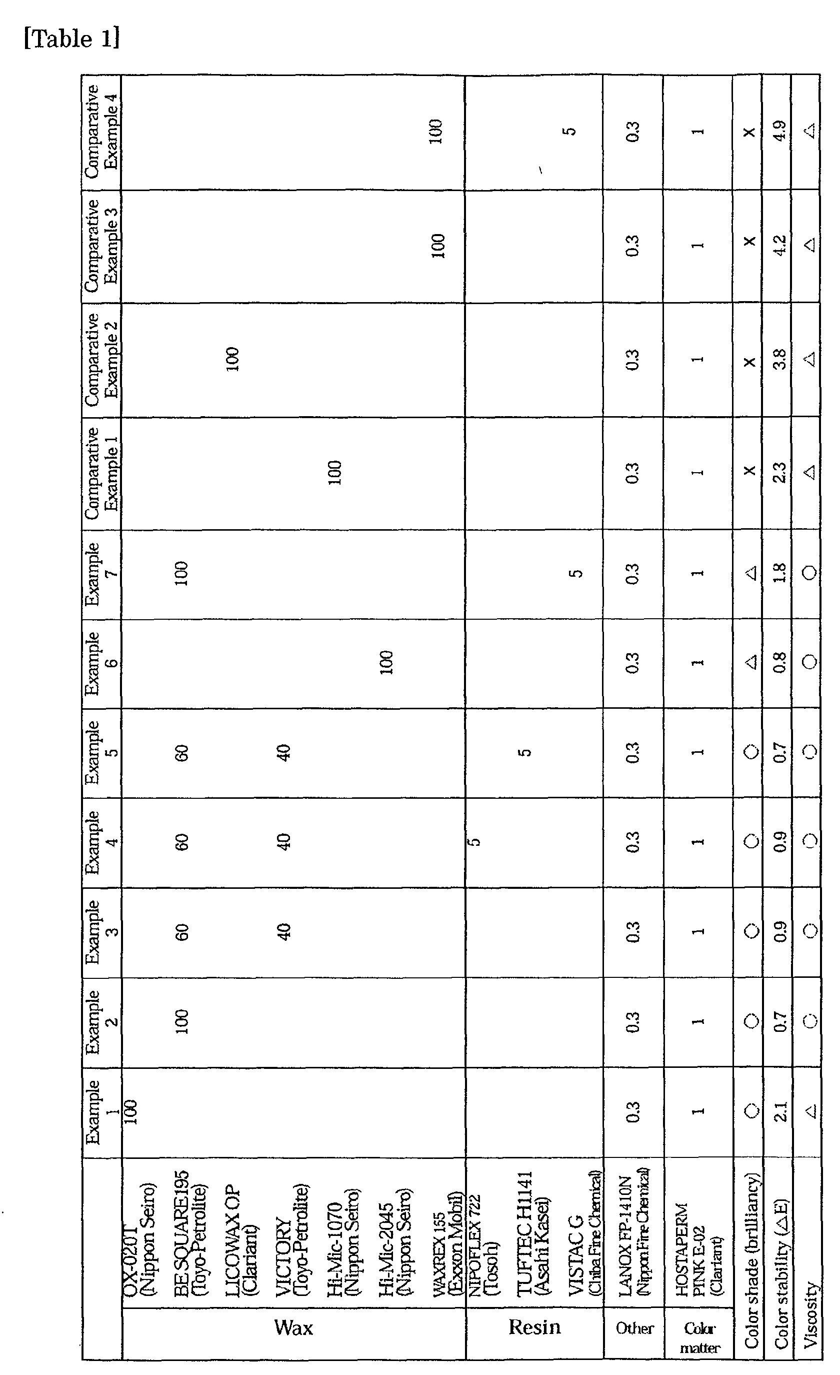

The hot melt ink composition of the present invention, when applied in ink-jet printing, allows accurate representation of its coloring matter's intrinsic color, providing rich color rendition. In addition, The hot melt ink composition of the present invention is so resistant to heat that it can remain stable in the head of ink-jet printing equipment where it is exposed to heat for an extended period of time, allowing it to be ink-jet printed on recording medium with excellent reproducibility of the color of the images thus recorded on the medium.

The features disclosed in the foregoing description and in the claims may, both separately and in any combination thereof, be material for realising the invention in diverse forms thereof.

## Claims

1. A hot melt ink composition for ink-jet printing, which is composed of coloring matter and wax (solid at room temperature), said wax giving a color value of 1.0 or less as defined by ASTM D 1500.

2. A hot melt ink composition for ink-jet printing, which is composed of coloring matter, wax (solid at room temperature) and resin, said wax giving a color value of 1.0 or less as defined by ASTM D 1500 and said resin giving a YI value of ―5 to 5 as defined by JIS K 7103.

3. A hot melt ink composition for ink-jet printing as claimed in claim (1), wherein said wax is saturated hydrocarbon wax.

4. A hot melt ink composition for ink-jet printing, which is composed of coloring matter, saturated hydrocarbon wax (solid at room temperature) and resin, said wax giving a color value of 1.0 or less as defined by ASTM D 1500 and said resin giving a YI value of ―5 to 5 as defined by JIS K 7103.

5. Material ink-jet recorded with such a hot melt ink composition as claimed (1), (2), (3) or (4).
